**Europäisches Patentamt**

**European Patent Office**

**Office européen des brevets**

(19)

(11) Veröffentlichungsnummer: **0 141 954**
**B1**

# EUROPÄISCHE PATENTSCHRIFT

(12)

(45) Veröffentlichungstag der Patentschrift:
**22.06.88**

(21) Anmeldenummer: **84110568.7**

(22) Anmeldetag: **05.09.84**

(51) Int. Cl.⁴: **G 02 B 26/02**, G 02 B 6/26

(54) **Verfahren zum Erzielen einer variablen optischen Dämpfung und Vorrichtung zur Durchführung des Verfahrens.**

(30) Priorität: **09.09.83 DE 3332631**

(43) Veröffentlichungstag der Anmeldung:
**22.05.85 Patentblatt 85/21**

(45) Bekanntmachung des Hinweises auf die Patenterteilung:
**22.06.88 Patentblatt 88/25**

(84) Benannte Vertragsstaaten:
**AT BE CH DE FR GB IT LI NL SE**

(56) Entgegenhaltungen:
**DE - A - 2 654 085**
**DE - A - 3 121 135**
**DE - C - 3 042 587**
**FR - A - 2 226 675**
**GB - A - 2 040 493**

**PATENTS ABSTRACTS OF JAPAN, Band 4, Nr. 5(E-165), 16. Januar 1980, Seite 150E165; & JP - A - 54 147 051 (HITACHI DENSEN K.K.) 16.11.1979**
**PATENTS ABSTRACTS OF JAPAN, Band 3, Nr. 99(E-132), 22. August 1979, Seite 98E132; & JP - A - 54 78144 (NIPPON DENSHIN DENWA KOSHA) 22.06.1979**
**IEEE JOURNAL OF QUANTUM ELECTRONICS, Band QE-14, Nr. 7, Juli 1978, Seiten 495-501, IEEE, New York, US; Y. MURAKAMI u.a.: "Bending losses of coated single-mode optical fibers"**

(73) Patentinhaber: **Siemens Aktiengesellschaft Berlin und München, Wittelsbacherplatz 2, D-8000 München 2 (DE)**

(72) Erfinder: **Göpfert, Wolfgang, Dr., Jägerweg 12, D-8152 Feldkirchen (DE)**
Erfinder: **Proebster, Walter, Dr., Menterschwaigstrasse 14, D-8000 München 90 (DE)**
Erfinder: **Will, Dieter Josef, Dipl.-Ing., Tannenstrasse 8, D-8023 Pullach (DE)**

## Beschreibung

Die Erfindung bezieht sich auf eine Vorrichtung zum Erzielen einer variablen optischen Dämpfung.

Es sind bereits optische Dämpfungsglieder auf der Basis von Faserversatz-Verlusten bekannt, bei denen zwei Glasfasern mit ihren Stirnseiten gegeneinander versetzt angeordnet sind, so dass sogenannte Faserversatz-Verluste auftreten. Die Justierung derartiger Dämpfungsglieder ist mit einem erheblichen Aufwand verbunden.

Weiterhin sind bereits optische Dämpfungsglieder bekannt, die auf der Basis einer Absorptionsdämpfung in abbildenden optischen Systemen arbeiten. Derartige Dämpfungsglieder sind ebenfalls mit einem grossen Aufwand verbunden. Bedingung für den Einsatz dieser Dämpfungsglieder ist das Auftrennen der Faserstrecke, verbunden mit unumgänglichen Zusatzverlusten.

Weiterhin ist aus der DE-C3-2 816 846 bereits ein Dämpfungsglied für Lichtwellen bekannt, bei dem ein zwischen zwei gegeneinander pressbaren Platten eingelegter gekrümmter Lichtwellenleiterabschnitt verwendet wird. Der von einer losen Hülle umgebene Lichtwellenleiter in Form einer ebenen Spirale ist zwischen Platten angeordnet. Die Platten sind durch ein verstellbares Befestigungsmittel zusammengehalten. In einer der Platten ist eine Durchführung für das innere Ende des Lichtwellenleiters vorgesehen. Bei diesem Dämpfungsglied werden im Lichtwellenleiter zusätzliche Reflektionsstellen erzeugt, an denen von den jeweils vorher angeregten Moden andere Moden erzeugt werden, was das gewünschte Modenspektrum schon auf kurze Längen hin vervollständigt. Ausser den ausbreitungsfähigen Moden werden dabei auch Leckwellen angeregt, die im Lichtwellenleiter lose geführt werden und durch Abstrahlen Dämpfung verursachen. Auf diese Weise lässt sich das Dämpfungsverhalten kontinuierlich verändern. Schwierigkeiten können sich jedoch dann ergeben, wenn eine besonders exakte und reproduzierbare optische Dämpfung gewonnen werden soll.

Aufgabe der Erfindung ist es, eine Vorrichtung zum Erzielen einer variablen optischen Dämpfung anzugeben, die ohne diffizile Justierarbeiten und ohne abbildende optische Systeme auskommt. Insbesondere soll das Einfügen einer von Null ab kontinuierlich einstellbaren exakten und reproduzierbaren optischen Dämpfung in einer geschlossenen, d.h. nicht aufgetrennten Monomode-Lichtwellenleiter-Strecke möglich sein.

Zur Lösung dieser Aufgabe gibt es mehrere Möglichkeiten. Ein erster Lösungsweg ist in anspruch 1 angegeben. Ein zweiter Lösungsweg geht aus Anspruch 6 hervor, ein dritter aus Anspruch 13.

Bei den erfindungsgemässen Vorrichtungen wird die räumliche Führung eines Monomode-Lichtwellenleiters vorgegebener Länge definiert und derart verändert, dass sich unterschiedliche krümmungsbedingte Abstrahlverluste ergeben, wobei mit zunehmender Krümmung oder Krümmungslänge die Verluste zunehmen. Die räumliche Führung der Monomodefaser, die insbesondere eine Glasfaser mit Ummantelung ist, kann dabei stetig oder in Stufen variiert werden. Insbesondere lassen sich in einer mechanisch gekrümmt geführten Monomode-Faser kontinuierlich definierte Dämpfungswerte einstellen. Untersuchungen im Rahmen der Erfindung haben ergeben, dass übliche Monomodefasern den bei der Betätigung der Vorrichtung auftretenden Beanspruchung durchaus gewachsen sind.

Auf beiden Lösungswegen ergeben sich in vorteilhafter Weise Vorrichtungen, bei denen zum Erzielen der gewünschten variablen optischen Dämpfung ausser einer Monomodefaser nur Mittel zur veränderbaren räumlichen Führung der Monomodefaser erforderlich sind. Ausserdem wird praktisch kein Zusatzrauschen induziert, so dass keine nennenswerte rauschbedingte Empfindlichkeitseinbusse in Kauf genommen werden braucht.

Es ist bereits bekannt, dass in gekrümmten Monomode-Fasern Abstrahlverluste auftreten (Heilblum, Harris, IEEE J. Que-11, S. 75–83; 1975, Marcatili, BSTJ, vol. 48; S. 2103–2132; 1969, Marcuse, J. Opt. Soc. of America, vol. 66; S. 216–220; 1976a).

Dieser physikalische Effekt wird im allgemeinen unter dem Aspekt betrachtet, dass die damit verbundenen Dämpfungen von Nachteil sind und möglichst vermieden werden sollen.

Ferner sind aus IEEE JOURNAL OF QUANTUM ELECTRONICS, Band QE-14, Nr. 7, Juli 1978, Seiten 495–501, IEEE, New York, US; Y. MURAKAMI u.a.: «Bending losses of coated single-mode optical fibers» Abstrahlverluste vom Biegeradius und von der Wellenlänge bekannt. Die Kenntnis dieser Zusammenhänge gestattet es, die mit einer Krümmung des Lichtwellenleiters verbundenen Dämpfungen so weit wie möglich zu vermeiden.

Man kann im Rahmen der Erfindung die Krümmung der Glasfaser auf der ganzen Länge oder auf einem Teil der Länge variieren.

Bei den Vorrichtungen nach Anspruch 1, 6 bzw. 13 wird eine einfach realisierbare und definierte Veränderung der optischen Dämpfung dadurch erzielt, dass bei Betätigung der Vorrichtung die Länge einer einer Krümmung unterworfenen Teillänge bzw. die gekrümmte Führungslänge des Lichtwellenleiters verändert wird. Dabei ergibt sich in vorteilhafter Weise ein besonders präzises, exakt einstellbares Dämpfungsglied.

Mit einer erfindungsgemässen Vorrichtung versehene Dämpfungsglieder lassen sich vorteilhaft in Messordnungen für die Untersuchungen optischer Monomode-Lichtwellenleiter-Übertragungssysteme oder als Verlängerungsleitungen verwenden.

Die Länge des Lichtwellenleiters ist vorzugsweise derart bemessen, dass sie zugleich als Verbindungsleitung, z.B. zwischen Sender oder Empfänger und erster systembedingter lösbarer Schnittstelle dienen kann.

Vorteilhafte weitere Ausgestaltungen der Erfindung ergeben sich aus den Unteransprüchen.

Bei der in Anspruch 2 angegebenen Vorrichtung kann der Krümmungsradius in axialer Richtung der Gewindespindeln entsprechend der gewünschten Charakteristik des optischen Dämpfungsgliedes verschiedene Werte haben. Dabei können die Spindeln in Bezug auf die mittlere Halterung des Lichtwellenleiters symmetrisch oder unsymmetrisch sein. Beim Aufwickeln des Lichtwellenleiters auf die Gewindespindel kann die Gesamtdämpfung über den Drehwinkel der Spindel eingestellt werden.

Durch die Massnahmen nach Anspruch 3 ergibt sich der Vorteil, dass bei besonders sicherer Führung des Lichtwellenleiters die Führungslänge und damit die Gesamtdämpfung linear mit dem Drehwinkel der zylindrischen Trommel zunimmt, d.h. unmittelbar über den Drehwinkel eingestellt werden kann. Der lineare Dämpfungsverlauf über dem Drehwinkel hat eine Steigung, die geringfügig von der Wellenlänge des übertragenden Lichts und von den Fasereigenschaften abhängt und weitgehend temperaturunabhängig ist. Von besonderem Vorteil ist die hohe Stabilität der eingestellten Dämpfung im Langzeitbetrieb.

Mit Hilfe der Massnahmen nach Anspruch 4 lässt sich erreichen, dass die freien Enden des Lichtwellenleiters dem Wickelkörper jeweils tangential und parallel zugeführt werden.

Haltert man bei der Vorrichtung nach Anspruch 5 die Führungswalze so, dass sich der Abstand zum Führungskörper verändern bzw. justieren lässt, so kann man zugleich den Zug einstellen, den der Lichtwellenleiter während des Aufwickelns auf den Wickelkörper hat. Ausserdem lässt sich durch Drehen der Führungswalze der Lichtwellenleiter von dem Wickelkörper abwickeln. Ein gewisser Zug des Lichtwellenleiters gewährleistet besonders geringe Toleranzen der Dämpfung über dem Drehwinkel.

Bei der in Anspruch 7 angewendeten Vorrichtung erfolgt die Dämpfungseinstellung mit Hilfe einer oder mehrerer kreisförmiger Scheiben durch Auslenken des Lichtwellenleiters bei ebener Faserführung. Der Scheibenradius gibt den maximal einstellbaren Krümmungsradius vor.

Der kompakte Aufbau ist insbesondere bei einer Verwendung der Vorrichtung als Verlängerungsleitung von Vorteil.

Die Vorrichtung nach Anspruch 12 hat den Vorteil, dass sich die Dämpfung ausgehend von einem kleinen Minimalwert in einem relativ grossen Bereich annähernd linear mit der Verschiebung der einen Führungsrolle verändern lässt.

Bei Ausbildung der Vorrichtung als optische Verlängerungsleitung sind die Massnahmen nach Anspruch 13 zweckmässig.

Zweckmässigerweise liegt für Monomode-Lichtwellenleiter für eine Lichtwellenlänge in einem Bereich von etwa 1275 nm bis etwa 1310 nm der die Krümmung bestimmende Durchmesser in einem Bereich von etwa 18 bis 23 mm.

Im Hinblick auf eine möglichst definierte Dämpfung ist es zweckmässig, einen Lichtwellenleiter mit wenigstens annähernd exakter Abbildung der mechanischen Führung bzw. Krümmung auf die eigentliche Faser bzw. wenigstens annähernd exakter Zuordnung der eigentlichen Faser zur mechanischen Führung zu verwenden. Hierzu dient insbesondere eine feste mechanische Verbindung des gesamten Lichtwellenleiter-Querschnitts. Gegebenenfalls können blanke oder festumspritzte Fasern, vorzugsweise festumspritzte Monomodefaser-Pigtails, vorteilhaft Verwendung finden.

Die Erfindung wird anhand der in den Figuren dargestellten Ausführungsbeispiele näher erläutert.

Es zeigen

Fig. 1 ein optisches Dämpfungsglied, bei dem ein Lichtwellenleiter auf eine als Doppelgewindespindel ausgebildete Trommel aufgewickelt wird,

Fig. 2 eine Doppelgewindespindel für eine Vorrichtung nach Fig. 1,

Fig. 3 einen Schnitt durch die Doppelgewindespindel nach Fig. 2,

Fig. 4 eine Doppelgewindespindel für eine Vorrichtung nach Fig. 1,

Figur 5 eine Vorrichtung zur Halterung der Andruckwalze einer Führungsvorrichtung für eine Vorrichtung nach Fig. 1.

Die Figuren 6 bis 8 zeigen ein optisches Dämpfungsglied, bei dem ein Lichtwellenleiter bei ebener Führung ausgehend von einer gestreckten Ausgangslage mittels kreisförmiger Scheiben auslenkbar ist, und zwar

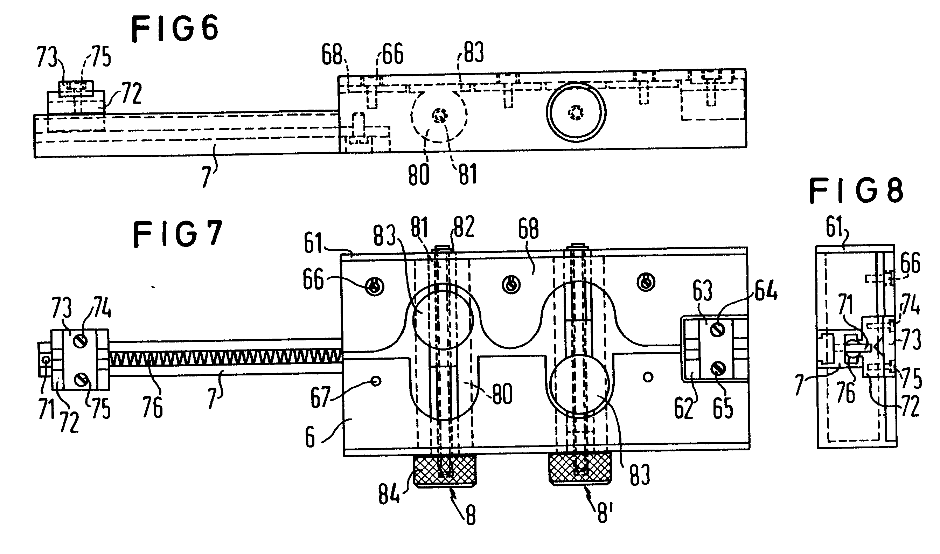

Figur 6 das Dämpfungsglied von vorn,

Figur 7 das Dämpfungsglied von oben und

Figur 8 das Dämpfungsglied von der Seite.

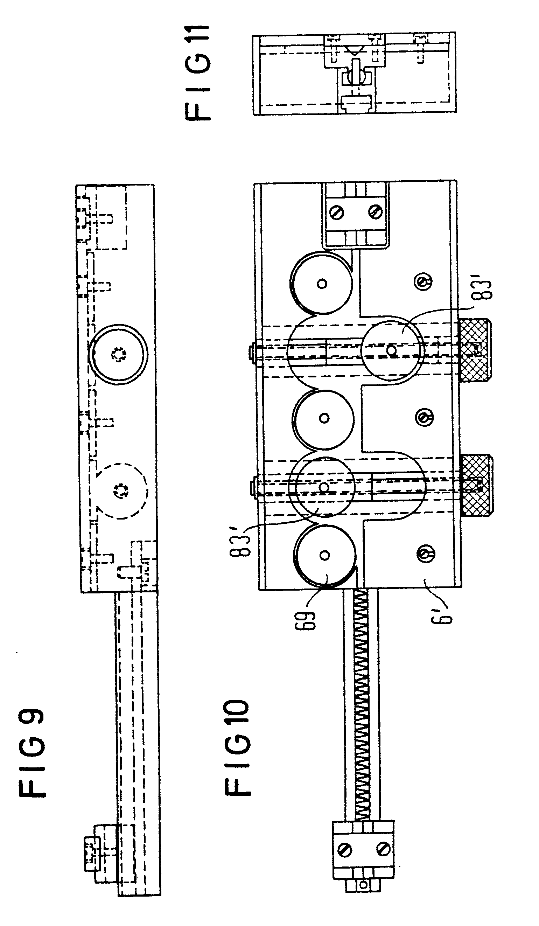

Die Figuren 9 bis 11 zeigen eine Abwandlung des in den Figuren 6 bis 8 gezeigten Dämpfungsgliedes, und zwar

Figur 9 das abgewandelte Dämpfungsglied von vorn,

Figur 10 das abgewandelte Dämpfungsglied von oben und

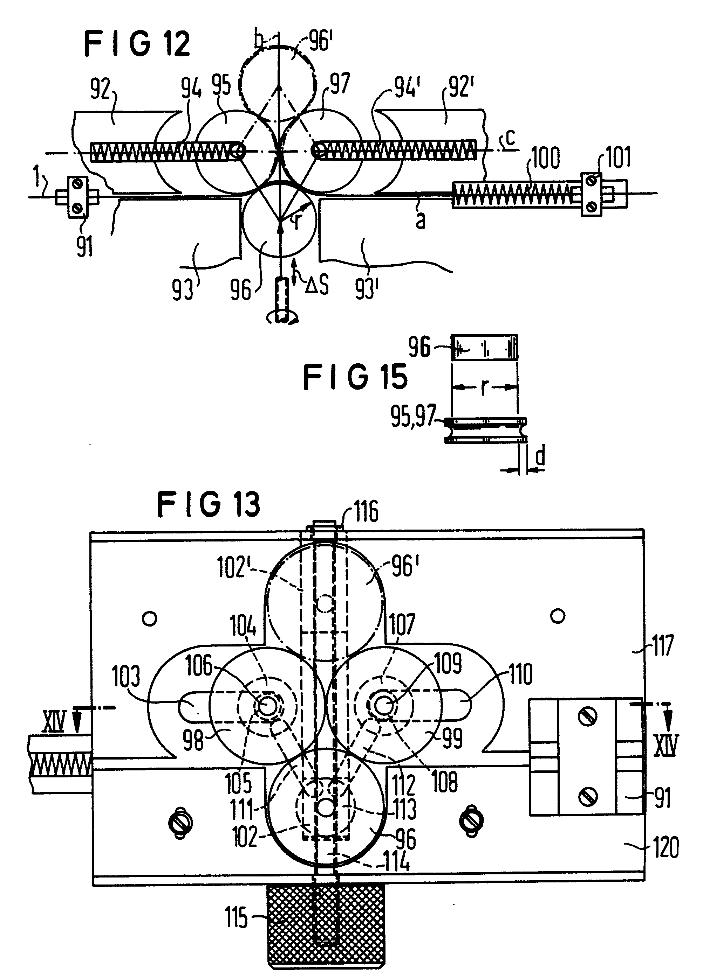

Figur 11 das abgewandelte Dämpfungsglied von der Seite.

Figur 12 zeigt ein optisches Dämpfungsglied, bei dem ein Lichtwellenleiter über variable Teile des Umfangs dreier Führungsrollen geführt ist.

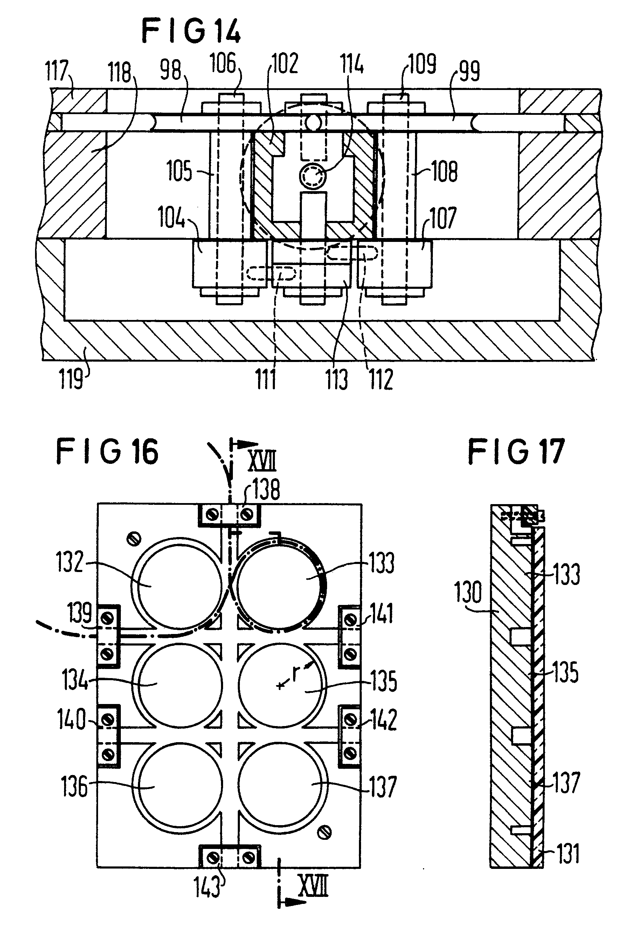

Die Figuren 13 und 14 zeigen eine Abwandlung des Dämpfungsgliedes nach Fig. 12, und zwar

Figur 13 von oben und

Figur 14 im Schnitt.

Figur 15 zeigt die Führungsrollen zu Fig. 12 bis 14.

Die Figuren 16 und 17 zeigen eine optische Verlängerungsleitung mit wählbarer Dämpfung, und zwar

Figur 16 die Verlängerungsleitung von oben und

Figur 17 die Verlängerungsleitung im Schnitt. Ferner zeigen

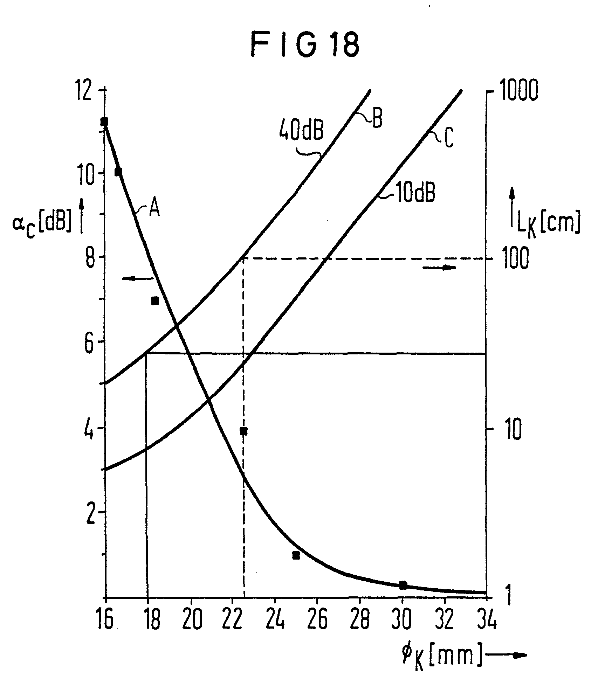

Figur 18 ein Dämpfungsdiagramm zur Wahl des Durchmessers des Krümmungskreises und

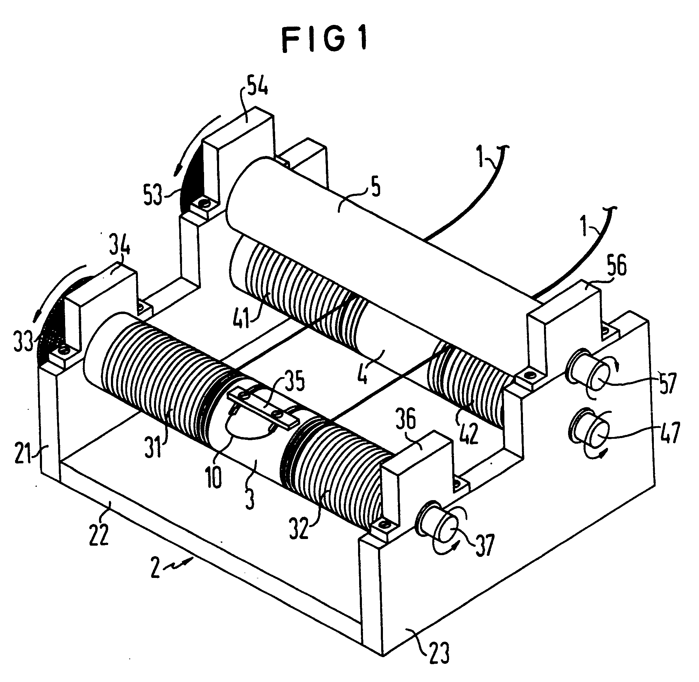

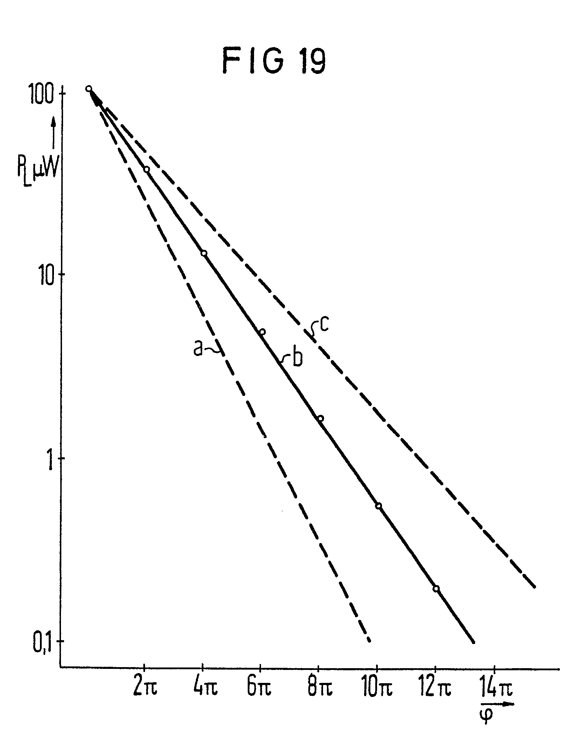

Figur 19 ein Dämpfungsdiagramm für das in Fig. 1 gezeigte Dämpfungsglied.

Das in Fig. 1 gezeigte optische Dämpfungsglied besteht aus dem Lichtwellenleiter 1 und einer Vorrichtung, mit deren Hilfe sich ein mehr oder weniger grosser Teil dieses Lichtwellenleiters auf eine Dämpfungsspindel aufwickeln lässt.

Die Dämpfungsspindel 3 ist auf die Achse 37 aufgesetzt, die ihrerseits in den beiden Lagerböcken 34 und 36 gelagert ist. Die Achse 37 trägt auf der einen Seite einen Bedienungsknopf, der die Form einer kreisrunden Scheibe hat.

Die Dämpfungsspindel ist – in axialer Richtung gesehen – in einem mittleren Teil mit einer Klemmvorrichtung 35 versehen, mit deren Hilfe eine Schlaufe 10 des Lichtwellenleiters 1 mittels einer Klemmverbindung auf der Dämpfungsspindel gehaltert wird. Die äusseren Bereiche der Dämpfungsspindel sind mit spiralförmig verlaufenden Führungsrillen versehen, die nach Art eines rechtsdrehenden Gewindes auf der einen und eines linksdrehenden Gewindes auf der anderen Seite angebracht sind.

Die zu beiden Seiten der Schlaufe 10 gelegenen freien Enden des Lichtwellenleiters 1 sind jeweils in eine Führungsrille gelegt und in tangentialer Richtung parallel geführt. Eine Drehung der Dämpfungsspindel bewirkt, dass die beiden Enden des Lichtwellenleiters 1 auf die Dämpfungsspindel aufgewickelt werden. Die in tangentialer Richtung parallel geführten freien Enden wandern dabei nach aussen.

Die freien Enden des Lichtwellenleiters 1 sind mit Hilfe der Führungsspindel 4 und der Führungswalze 5 geführt. Die Führungsspindel 4 ist mit Hilfe der Achse 47 in den Seitenteilen 21 und 23 der Halterung 2 drehbar gehaltert. Die Führungsspindel 4 ist – abgesehen von der fehlenden Klemmvorrichtung 35 – wie die Dämpfungsspindel 3 ausgebildet.

Über der Führungsspindel 4 ist die Führungswalze 5 angeordnet. Diese ist mit Hilfe der Achse 57, die in den Lagerböcken 54 und 56 gelagert ist, gehaltert. Die Lagerböcke 54 und 56 sind auf die Seitenteile 21 und 23 aufgesetzt. Auf der einen Seite ist – dem Bedienungsknopf 33 benachbart – ein Bedienungsknopf 53 nach Art einer kreisförmigen Scheibe auf die Achse gesetzt.

Um die Dämpfung zu erhöhen, wird der Bedienungsknopf 33 in Pfeilrichtung gedreht. Dabei wickelt sich der Lichtwellenleiter auf beiden Seiten der Schlaufe 10 auf die Dämpfungsspindel 3 auf und die freien Enden des Lichtwellenleiters 1 wandern nach aussen. Bei diesem Vorgang ergibt sich der Zug, der den Lichtwellenleiter spannt, durch den Anpressdruck der Führungswalze 5.

Um die Dämpfung zu verringern, wird der Bedienungsknopf 53 in Pfeilrichtung gedreht. Dabei nimmt die Führungswalze 5 den aus den Führungsnuten etwas vorstehenden Lichtwellenleiter 1 mit und wickelt ihn von der Dämpfungsspule 3 ab. Um auch in diesem Fall den Lichtwellenleiter gespannt zu halten, kann man die Lagerung der Achse 37 der Dämpfungsspindel 3 mit einer gewissen Reibung versehen oder eine Bremsvorrichtung anbringen. Die Führungswalze besteht zumindest an ihrer Oberfläche aus einem Material, das geeignet ist, den Lichtwellenleiter mitzunehmen, insbesondere aus plastischem Material, vorzugsweise Gummi. Ferner ist von Vorteil, dass die Umhüllung der Glasfaser bzw. der Lichtwellenleiter eine Oberfläche hat, die eine gewisse Haftung auf der Führungswalze gewährleistet.

Bei Anwendungen, die geringere Anforderungen an die Präzision stellen, insbesondere bei einer Anwendung als Verlängerungsleitung, kann die Führungsvorrichtung entfallen.

Man kann das Dämpfungsglied dadurch weiter vervollkommnen, dass die Achsen 37, 47 und 57 durch ein Getriebe oder durch Zahnkränze mechanisch gekoppelt sind oder mit Hilfe einer Antriebsvorrichtung angetrieben werden. Bei einem motorgesteuerten geregelten Antrieb kann der Zug dadurch gesteuert werden, dass auf den Achsen 37 und 47 jeweils eine Lochscheibe angebracht wird und dass die Drehungen der Lochscheiben mit einem vorgegebenen Schlupf synchronisiert werden.

Im Hinblick auf die exakte Reproduzierbarkeit kann das Dämpfungsglied ohne weiteres geeicht werden, derart, dass der Verlauf der Dämpfung über den Drehwinkel gemessen wird. In Verbindung mit einer automatischen Steuerung wird dieser Dämpfungsverlauf zweckmässigerweise in einen Speicher eingegeben, so dass sich danach diskrete Dämpfungswerte gezielt einstellen lassen.

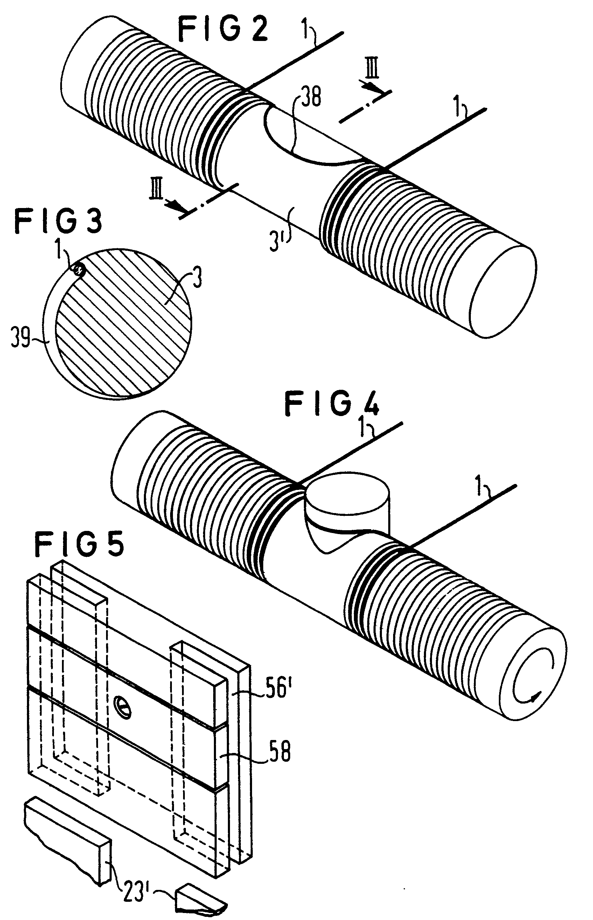

Fig. 2 zeigt eine Dämpfungsspindel für das in Fig. 1 gezeigte Dämpfungsglied. In Fig. 3 ist ein Schnitt durch die in Fig. 2 gezeigte Dämpfungsspindel dargestellt.

Die Dämpfungsspindel nach Fig. 2 hat in ihrem mittleren Bereich eine Führungsnut 38, die die Führungsnuten der äusseren Spindel nach Art einer Schlaufe miteinander verbindet. In diese Führungsnut lässt sich eine mittlere Schlaufe des Lichtwellenleiters 1 einlegen und insbesondere durch Verkleben sichern.

Im Hinblick auf eine möglichst geringe Grunddämpfung des Dämpfungsgliedes erhält die Schlaufe 10 einen möglichst grossen Durchmesser.

Fig. 3 zeigt die Dämpfungsspindel nach Fig. 2 im Schnitt AB, um die Faserführung im Aufnahmebereich der Führungsnut zu zeigen. Im weiteren Verlauf der Dämpfungsspindel geht die Führungsnut in den ersten Gewindegang über.

Fig. 4 zeigt eine Ausführungsform einer Doppelspindel, bei der zur Bildung einer Schlaufe des Lichtwellenleiters im mittleren Bereich der Dämpfungsspindel ein zylindrischer Aufsatz nach Art einer Nocke vorgesehen ist. Die Schlaufe 10 ist um den zylinderförmigen Teil herumgelegt und so gehaltert.

Zur Justierung des Anpressdruckes, der mittels der Führungswalze erzielt wird, kann eine verstellbare Halterung der Führungswalze zweckmässig sein.

Fig. 5 zeigt einen als Schiebeteil ausgebildeten Lagerbock 56', der ein H-förmiges Profil aufweist und in einem nach oben offenen Schlitz des Seitenteiles 23' verschiebbar gehaltert ist und sich mit Hilfe des Klemmteiles 58 fixieren lässt.

Auf diese Weise lässt sich der Abstand der Führungswalze von der Führungsspindel leicht an verschiedene Durchmesser des Lichtwellenleiters anpassen.

Die Figuren 6, 7 und 8 zeigen – von vorn, von oben und von der Seite betrachtet – ein Dämpfungsglied, bei dem ein Lichtwellenleiter in einer Ausgangsstellung des Dämpfungsgliedes geradlinig verlaufend gestreckt ist und in mehreren Teilbereichen einer Krümmung unterworfen werden kann. Dabei kann z.B. bei Verwendung von zwei Krümmungsschiebern eine Dämpfung von zwei mal 10 dB erzielt werden.

Der im wesentlichen quaderförmige Träger 6 ist mit zwei quer zu seiner Längsausdehnung verlaufenden Ausnehmungen versehen. Diese Ausnehmungen haben einen kreissegmentförmigen Querschnitt. Dieser Querschnitt entsteht dadurch, dass der Träger zunächst mit einer zylindrischen Ausnehmung versehen wird und daran anschliessend an der Oberseite eine Ausnehmung vorgesehen wird, die eine ebene Grundfläche hat und soweit in den Träger hineinreicht, dass längs der zylindrischen Ausnehmung ein Schlitz entsteht.

Die Ausnehmung reicht von der Vorderseite des Trägers bis kurz vor die Rückseite. An der Rückseite setzt sich die Ausnehmung mit einem wesentlich kleineren Durchmesser fort.

Fig. 6 zeigt das Dämpfungsglied von vorn bei abgenommener Frontschiene. In die Ausnehmungen sind Krümmungsschieber eingesetzt, die aus einem in die Ausnehmung formflüssig passenden Führungsteil und einer darauf aufgesetzten kreisförmigen Scheibe bestehen. Das Führungsteil ist mit einem in axialer Richtung verlaufenden Innengewinde versehen. In das Führungsteil ist eine Dämpfungsstellschraube geschraubt, die in zylindrischen Löchern des Trägers geführt ist, auf der Vorderseite des Trägers einen Drehknopf aufweist und an der Rückseite mit Hilfe eines Sprengringes gehalten ist.

Die auf dem Träger oben vorgesehene Ausnehmung ist von kammartiger Gestalt. Sie weist einen durchgehenden Absatz auf, derart, dass in Längsrichtung eine Mittellinie der rechteckförmigen Oberfläche des Trägers die beiden Stufen begrenzt und die untere hintere Stufe in U-förmigen Zonen in die vordere obere Stufe hineinreicht, wobei die U-förmigen Bereiche bezogen auf die Ausnehmungen im Träger mittig angeordnet sind.

Im Bereich der unteren Stufe ist auf den Träger ein kammartiger Teil aufgesetzt. Die Zinken dieses Kammes und die dazwischenliegenden Bereiche haben jeweils kreisbogenartige Gestalt. Die Zwischenräume sind jeweils so gestaltet, dass die Scheibe des zugeordneten Krümmungsschiebers und der von diesem geführte Lichtwellenleiter in dem Zwischenraum Platz finden.

An einer Schmalseite des Trägers ist eine Schiene 7 in den Träger eingesetzt, die in Längsrichtung seitlich aus dem Träger herausragt und mit einer Rückholvorrichtung versehen ist. Diese Schiene 7 hat einen Querschnitt in Form eines Doppel-U, wobei die beiden Stege des U an ihren äusseren Enden nach innen weitergeführt sind, so dass sich in der einen Hälfte der Schiene ein quaderförmiger Schieber haltern lässt. Zwischen dem Schieber und dem Träger befindet sich eine etwas auf Druck beanspruchte Spiralfeder. Als äusserer Anschlag für den Schieber dient der Begrenzungsstift 71. Der Schieber trägt die Klemmvorrichtung 73, 74, mit deren Hilfe der Lichtwellenleiter gehaltert wird.

Eine weitere Klemmvorrichtung ist auf der der Führungsschiene 7 abgewandten Schmalseite des Trägers in den Träger mittig eingesetzt.

Die Führungsplatte 68 ist zwecks Anpassung der Vorrichtung an unterschiedlich dicke Lichtwellenleiter mit Hilfe der Schrauben 66, die in Langlöcher eingreifen, verstellbar befestigt. Die Abdeckplatte 68 besteht aus durchsichtigem Material, insbesondere Plastik, und wird nach dem Einlegen des Lichtwellenleiters auf das Dämpfungsglied aufgesteckt, wobei die Köpfe der Schrauben 66 in die Abdeckplatte und in die Abdeckplatte eingesetzte Stifte in Ausnehmungen des Trägers 6 eingreifen.

Nach Aufstecken der Abdeckplatte 68 ist der Lichtwellenleiter im Dämpfungsglied allseitig geführt.

Durch Drehen am Knopf 84 einer Dämpfungseinstellschraube wird der Krümmungsschieber 83 bewegt, so dass der Lichtwellenleiter eine Auslenkung erfährt, bei der er sich an den Umfang der Scheibe 83 anlegt und zu beiden Seiten der Scheibe 83 sich an die Kontur der Führungsplatte 68 anlegt und so nach Art einer S-Kurve in die Hauptausgangs- bzw. Hauptrichtung überführt wird.

Beim Einstellen einer grösseren Dämpfung wird ein Teil des Lichtwellenleiters längs der ihn führenden Teile bewegt und hat daher zweckmässigerweise eine glatte Oberfläche.

Der Lichtwellenleiter 1 soll einer möglichst geringen Zugbeanspruchung ausgesetzt werden. Aus diesem Grund werden die Krümmungsschieber zweckmässigerweise in vorgegebener Reihenfolge betätigt, und zwar mit fallendem Abstand von der Rückholvorrichtung. Im gezeigten Beispiel ist der rechte Schieber als erster auszulenken und als letzter zurückzustellen.

Die Scheiben 83 sind aus einem Material, insbesondere Plastik, das ein Rutschen des Lichtleiters ermöglicht. Zur Verringerung der Reibung kann man die Scheiben 83 auf den Schiebern 80 drehbar haltern. Eine Vorrichtung, bei der auch die Führungsplatte drehbar gehalterte Teile enthält, geht aus den Figuren 9 bis 11 hervor. Diese Vorrichtung stimmt weitgehend mit der nach den Figuren 6 bis 8 überein. Abweichend sind die gekrümmten Zinken des Führungsteiles als drehbar gehalterte Rollen ausgebildet. Ausserdem ist nicht wie nach den Figuren 6 bis 8 das Führungsteil 68, sondern der die stumpfen Zinken aufweisende Kamm 6' quer zur Hauptrichtung des Lichtwellenleiters justierbar gehalten. Auf diese Weise wird erreicht, dass als justierbarer Teil der Führungsvorrichtung der einfacher gestaltete Teil Verwendung findet.

Bei der in Fig. 12 gezeigten Vorrichtung wird der Lichtwellenleiter 1 mittels der Führungsrolle 96 ausgelenkt und mit Hilfe der auf Druck beanspruchten Feder 100 zurückgeholt. Er verläuft zwischen den Arretierungen 91 und 101 auf der Geraden a. Aus der ersten Geraden a heraus ist er nach Art einer Schlaufe über die drei beweglich gehalterten Führungsrollen 96', 95 und 97 geführt.

Die Führungsrolle 96' ist mit ihrer Achse längs der Geraden b verschiebbar gehalten. Die Achsen der Führungsrollen 98 und 99 sind längs der Geraden c, die senkrecht auf der Geraden b besteht, gegenläufig zueinander auslenkbar gehalten.

Die Führungsrollen 95 und 97 sind in den Halterungen 92 und 92' federnd gehalten. Die Führungsrolle 96' lässt sich mittels einer in der Figur nicht dargestellten Führungsstange auf der Geraden b verschieben. Dabei bewegt sie sich zwischen den beiden Führungsrollen 95 und 97 hindurch. Die Führungsrollen 95 und 97 führen dabei einander gegenläufige Bewegungen aus, derart, dass sie mit ihrer Kontur längs der Geraden a wandern.

Der Lichtwellenleiter 1 verläuft zwischen den Halterungen 92 und 92' und den Führungen 93 und 93' zu beiden Seiten des Führungsrollenpaares 95, 97 auf der Geraden a. Ausserdem ist er über die Führungsrollen 95 ... 97 geführt. In der ausgezogen dargestellten Endlage der Führungsrolle 96' ist er aus der Geraden a heraus nach Art eines Wellenberges so ausgelenkt, dass durch die Führungsrolle 96 der Wellenberg und durch die Führungsrollen 95 und 97 die Wellentäler bestimmt werden. In der strichliert dargestellten anderen Endlage befindet sich die Führungsrolle 96' mittig auf den sich berührenden Führungsrollen 95 und 97. Der Lichtwellenleiter 1 umschlingt die Führungsrolle 96 zu $^5/_6$ ihres Umfangs und liegt an den Führungsrollen 95 und 97 zu je $^5/_{12}$ des Umfanges an.

Die Dämpfung verläuft nach einer arc tg-Abhängigkeit und ist annähernd proportional dem Weg Δ s, den die Führungsrolle 96 zurücklegt und daher annähernd proportional der Zahl der Umdrehungen einer Gewindestange, die die Führungsrolle 96 bewegt. Die einer Krümmung entsprechend dem Radius r der Führungsrollen 95 ... 97 unterworfene Teillänge des Lichtwellenleiters 1 lässt sich zwischen einem Minimalwert entsprechend der Länge $\frac{2\pi}{3}$ r und einem Maximalwert entsprechend der Länge $\frac{10\pi}{3}$ r verändern.

Bei dem in den Figuren 13 und 14 gezeigten Dämpfungsglied sind wie nach Fig. 12 drei kreisrunde Führungsrollen 98, 99, 96 so angeordnet, dass sie einander an ihrem Umfang berühren. Auch hinsichtlich der Relativbewegungen der Führungsrollen und der Führung des Lichtwellenleiters entspricht die Vorrichtung der nach Fig. 12.

Eine erste Führungsrolle 96 ist auf dem Schieber 102 gehalten, der in einer Führungsnut längs einer Geraden geführt ist. Der Schieber 102 trägt oben die Führungsrolle 96. In einem unseren Bereich sind im Schieber 102 die beiden Spreizstäbe 111 und 112 beweglich gehalten.

Die Führungsrollen 98 und 99 sind mit Achsen 106, 109 versehen, die in einem an die Führungsrolle angrenzenden Bereich eine Laufrolle 105 bzw. 108 und im weiteren Verlauf ein Widerlager für den zugeordneten Spreizstab 111 bzw. 112 tragen. Die Laufrollen 105, 108 sind in Führungsschlitzen 103, 110 geführt, die einander fluchtend zu beiden Seiten der und senkrecht zur Führungsnut angeordnet sind.

Die Führungsrolle 96 lässt sich mit Hilfe des Schiebers 102 zwischen den beiden weiteren Führungsrollen 98, 99 hindurch bewegen. In den beiden Endstellungen weist jede Führungsrolle einen Berührungspunkt mit jeder der beiden anderen Führungsrollen auf. In den dazwischenliegenden Positionen sind die beiden weiteren Führungsrollen 98, 99 voneinander getrennt. In einer mittleren Stellung sind die Mittelpunkte der Führungsrollen auf ein und derselben Geraden fluchtend mit den Führungsschlitzen 103, 110 angeordnet.

Wird die Führungsrolle 96 zwischen den beiden Führungsrollen 98, 99 hindurch bewegt, so bewegen sich die beiden Führungsrollen 98, 99 zunächst voneinander weg und dann wieder aufeinander zu.

Der Lichtwellenleiter ist in der Figur nicht dargestellt. In der einen Endstellung der Führungsrolle 96 verläuft der Lichtwellenleiter 1 zu beiden Seiten der Rollenanordnung 96, 98, 99 auf einer Geraden, die durch diejenige gemeinsame Tangente der beiden Führungsrollen 98, 99 gebildet ist, die die erste Führungsrolle 96 schneidet. Der Lichtwellenleiter 1 verläuft im äusseren Bereich längs dieser Tangente und im Bereich der Führungsrollen 98, 99 zwischen den Rollen 96 und 98 und zwischen den Rollen 96 und 99.

Wird die Führungsrolle 96 durch die Führungsrollen 98 und 99 hindurch zur anderen Endstellung bewegt, so wird der Lichtwellenleiter 1 ebenfalls zwischen den beiden Führungsrollen 98 und 99 hindurchgezogen. In dieser Endstellung der Führungsrolle 96 verläuft der Lichtwellenleiter 1 zunächst über die Führungsrolle 98, dann über die Führungsrolle 96 und schliesslich über die Führungsrolle 99.

Bei den Vorrichtungen nach den Figuren 12 bis 14 haben die Führungsrollen zweckmässigerweise die in Fig. 15 gezeigte Form. Die Rollen 95 und 97 haben eine rundumlaufende Rille, deren Innendurchmesser gleich dem Radius r der Rolle 96 ist. Die Tiefe der Rille ist wenigstens gleich dem Maximaldurchmesser der verwendeten Lichtwellenleiter bemessen und beträgt insbesondere etwa 2 mm.

Bei der in Figuren 16 und 17 gezeigten Anordnung handelt es sich um ein ebenes Dämpfungsglied, das insbesondere als Verlängerungsleitung geeignet ist.

Das einstückige Formteil 130 besitzt mehrere Krümmungsscheiben 132 ... 137, die in regelmässiger Anordnung in zwei Spalten und drei Zeilen angeordnet sind. Am Rande des Formteiles 130 befinden sich Ausnehmungen, in die die Arretiervorrichtungen 138 bis 143 eingesetzt sind. Mit Hilfe dieser Arretiervorrichtungen 138 bis 143 wird der Lichtwellenleiter am Orte des Eintritts in das Dämpfungsglied und am Orte des Austrittes aus dem Dämpfungsglied gehalten.

Die Arretiervorrichtungen 138 und 143 sind an den Schmalseiten des Trägers 130 mittig angeordnet. Die Arretiervorrichtungen 139 und 141 sind am Rand des Trägers in der Mitte zwischen der ersten und zweiten Zeile und die Arretiervorrichtungen 140 und 142 in der Mitte zwischen der zweiten und dritten Zeile von Krümmungsscheiben angeordnet.

Zwischen zwei einander gegenüberliegenden Arretiervorrichtungen befindet sich jeweils eine Führungsnut zur Führung des Lichtwellenleiters. Auch um die Krümmungsscheiben herum sind ebenfalls Führungsnuten vorgesehen. Zwischen zwei einander benachbarten Krümmungsscheiben gibt es jeweils einen Bereich, in dem die Führungsnuten der Führungsscheiben und eine zwei Arretiervorrichtungen verbindende Nut zu ein und derselben Ausnehmung vereinigt sind.

Nach dem Einbringen des Lichtwellenleiters in die Anordnung wird diese mittels der Abdeckplatte 131 geschlossen.

Die Anordnung bietet eine Vielzahl von Möglichkeiten, den Lichtwellenleiter über eine oder mehrere Krümmungsscheiben zu führen. Dabei kann der Lichtwellenleiter gegebenenfalls mehrfach um ein und dieselbe Krümmungsscheibe geschlungen werden.

In Abwandlung des gezeigten Beispiels können bei der Herstellung der Vorrichtung die Krümmungsscheiben auf eine Grundplatte aufgesetzt werden, wobei die Führungsnuten entfallen.

Durch entsprechende Führung des Lichtwellenleiters lässt sich die Dämpfung entsprechend Vielfachen von $\frac{\pi}{2}$ r diskret einstellen. Bei der gezeigten Führung des Lichtwellenleiters entspricht die Dämpfung der Länge $\frac{5\pi}{2}$ r.

Zur Erzielung unterschiedlicher Dämpfungswerte kann der Radius r im zulässigen Bereich $r_{min} \leqslant r \leqslant r_{max}$ variiert werden. Die gezeigte Anordnung kann auf die je nach Anwendungsfall gewünschte Anzahl von Krümmungsscheiben reduziert oder erweitert werden.

Die Lage der Faser kann insbesondere entsprechend dem vorhandenen Platz für die Zuführungen gewählt werden.

In Fig. 18 ist in Kurve A für einen bestimmten Monomode-Lichtwellenleiter und für eine bestimmte Wellenlänge (1275 nm) die charakteristische Dämpfung dargestellt. Dabei ist unter charakteristischer Dämpfung die Dämpfung pro Krümmungsschleife mit dem jeweiligen Krümmungsradius zu verstehen.

Die Kurven B und C zeigen die Abhängigkeit der gekrümmten Faser-Führungslänge vom Krümmungskreisdurchmesser $\varnothing_k$ für eine Gesamtdämpfung als Parameter (Kurve B: 40 dB; Kurve C: 10 dB).

Aus diesem Zusammenhang lässt sich die Dimensionierung des Krümmungskreisdurchmessers angeben. Setzt man z.B. eine maximale gekrümmte Führungslänge von einem Meter als obere praktikable Grenze an, so ergibt sich für die obere Grenze des Krümmungskreisdurchmessers bei einer Dämpfung von 40 dB ein Krümmungskreisdurchmesser von etwa 23 mm.

Im Hinblick auf eine möglichst kompakte Anordnung sind an sich kleine Krümmungskreisdurchmesser, d.h. grosse charakteristische Dämpfungswerte von Vorteil. Untersuchungen haben jedoch ergeben, dass bei Anwendungen, bei denen es auf eine gute Reproduzierbarkeit der Einstellung ankommt, eine untere Grenze des Krümmungskreisdurchmessers nicht unterschritten werden sollte. Im gezeigten Beispiel ist dies ein Krümmungskreisdurchmesser von 18 mm. Diese Grenze liegt im allgemeinen bei höheren Krümmungskreisdurchmessern als die ebenfalls zu beachtenden Grenzwerte für die mechanische Belastbarkeit.

Die bei den Messungen verwendete Monomode-Faser hat die folgenden Daten:
Kerndurchmesser: 10 µm
Manteldurchmesser: 125 µm
Brechzahldifferenz Kern/Mantel: 0,003
Cut-off-Wellenlänge: 1,225 µm.

Dabei ist die Cut-off-Wellenlänge die Wellenlänge, bei der der Übergang zur Zweimodenfaser stattfindet.

Bei der Verwendung anderer Monomode-Lichtwellenleiter und/oder anderer Lichtwellenlängen sind bei der Bemessung des Krümmungskreisdurchmessers die genannten Kriterien in gleicher Weise zu berücksichtigen bzw. messtechnisch zu erfassen, wobei der Lichtwellenleiter jeweils im Monomodebereich zu betreiben ist.

Fig. 19 zeigt für das Dämpfungsglied nach Fig. 1 mit einem Krümmungskreisdurchmesser von 23,5 mm die Streuung der charakteristischen Dämpfung für verschiedene Pigtails gleichen Fasertyps und (wie bei Fig. 18) verschiedene Betriebswellenlängen. Aus der Geraden b ist der lineare Zusammenhang zwischen Drehwinkel und Dämpfung ersichtlich. Die Geraden a und c geben die Grenzen des Streubereiches an.

**Patentansprüche**

1. Vorrichtung zum Erzielen einer variablen optischen Dämpfung, dadurch gekennzeichnet, dass wenigstens ein Teil eines Monomode-Lichtwellenleiters (1) auf einen Wickelkörper aufwikkelbar ist (Fig. 1), so dass die Länge des einer Krümmung unterworfenen Teils des Lichtwellenleiters verändert wird.

2. Vorrichtung nach Anspruch 1, dadurch gekennzeichnet, dass der Wickelkörper eine mittige Haltevorrichtung (35) zur Halterung einer Schlaufe (10) des Lichtwellenleiters (1) und zu beiden Seiten davon einander gegenläufig gerichtete Schraubengänge zur Aufnahme der von der Schlaufe ausgehenden Enden des Lichtwellenleiters aufweist (Fig. 1, 2, 4).

3. Vorrichtung nach Anspruch 1 oder 2, dadurch gekennzeichnet, dass der Wickelkörper als zylindrische Trommel (3) ausgebildet ist (Fig. 1 ...4).

4. Vorrichtung nach Anspruch 3, dadurch gekennzeichnet, dass die beiden Enden des Lichtwellenleiters (1) über eine Führungsvorrichtung geführt sind, die einen Führungskörper mit den Schraubengängen des Wickelkörpers analogen Schraubengängen enthält (Fig. 1).

5. Vorrichtung nach Anspruch 4, dadurch gekennzeichnet, dass die Führungsvorrichtung einen als zylindrische Trommel ausgebildeten Führungskörper (4) und eine Führungswalze (5) enthält (Fig. 1).

6. Vorrichtung zum Erzielen einer variablen optischen Dämpfung, dadurch gekennzeichnet, dass ein Monomode-Lichtwellenleiter über wenigstens einen quer zur Hauptrichtung des Lichtwellenleiters verschiebbaren Führungskörper geführt ist, der wenigstens ein Zylindersegment umfasst, an dessen Mantelfläche der Lichtwellenleiter wenigstens teilweise anliegt (Fig. 6 ... 16).

7. Vorrichtung nach Anspruch 6, dadurch gekennzeichnet, dass der Lichtwellenleiter mittels einer Rückholvorrichtung (7, 76) gespannt und mittels einer Führungsvorrichtung geführt ist, die auf zwei einander gegenüberliegenden Seiten des Lichtwellenleiters kammartige Führungsteile mit fluchtenden Zinken aufweist und bei der wenigstens an einer Stelle ein Führungskörper von einer Lage zwischen zwei Zinken des einen Kammes in eine Lage zwischen den beiden gegenüberliegenden Zinken des anderen Kammes verschiebbar ist, dass die Zinken eines der Führungsteile gekrümmt sind und dass der Lichtwellenleiter jeweils zwischen den gekrümmten Zinken und dem verschiebbaren Führungskörper geführt ist (Fig. 7, 10).

8. Vorrichtung nach Anspruch 7, dadurch gekennzeichnet, dass der Führungskörper als zylindrische Scheibe (83) ausgebildet ist (Fig. 7).

9. Vorrichtung nach Anspruch 8, dadurch gekennzeichnet, dass die zylindrische Scheibe als Rolle (82') drehbar gehalten ist (Fig. 10).

10. Vorrichtung nach einem der Ansprüche 7 bis 9, dadurch gekennzeichnet, dass der die gekrümmten Zinken aufweisende Führungsteil (68) einstückig ausgebildet und quer zur Hauptrichtung des Lichtwellenleiters justierbar gehalten ist (Fig. 6 ... 8).

11. Vorrichtung nach einem der Ansprüche 7 bis 9, dadurch gekennzeichnet, dass die gekrümmten Zinken drehbar gehalterte Führungsrollen (69) umfassen und so der gegenüberliegende Führungsteil (6') an der Stirnseite flache Zinken aufweist und quer zur Hauptrichtung des Lichtwellenleiters justierbar gehalten ist (Fig. 9 ... 11).

12. Vorrichtung nach Anspruch 6, dadurch gekennzeichnet, dass der Lichtwellenleiter mittels einer Rückholvorrichtung gespannt und mittels einer Führungsvorrichtung längs einer ersten Geraden geführt ist und aus der ersten Geraden heraus über drei beweglich gehalterte Führungsrollen (96, 98, 99) geführt ist und dass eine der Führungsrollen (96) mit ihrer Achse längs einer zweiten Geraden senkrecht zur ersten Geraden verschiebbar gehalten ist und dass die Achsen der beiden weiteren Führungsrollen (98, 99) längs einer Geraden parallel zur ersten Geraden gegenläufig zueinander auslenkbar gehalten sind, derart, dass die eine Führungsrolle (96) zwischen den beiden weiteren Führungsrollen (98, 99) hindurch bewegbar ist und jeweils ein Punkt der Mantelflächen der weiteren Führungsrollen (98, 99) wenigstens näherungsweise längs der ersten Geraden bewegbar ist und dass der Lichtwellenleiter über die Führungsrollen derart geführt ist, dass er in der einen Endlage der einen Führungsrolle (96) aus der ersten Geraden heraus in Form einer Welle mit durch die eine Führungsrolle bestimmtem Wellenberg und durch die weiteren Führungsrollen bestimmten Wellentälern ausgelenkt ist (Fig. 13, 14).

13. Vorrichtung zum Erzielen einer variablen optischen Dämpfung, gekennzeichnet durch einen Träger (130) mit einer Anordnung von mehreren, als zylindrische Zapfen (132) ... 137) ausgebildeten Führungskörpern, um die ein Monomode-Lichtwellenleiter in unterschiedlichen Varianten schlingbar ist, wobei der Träger mit Arretiervorrichtungen zur Halterung des Lichtwellenleiters versehen ist (Fig. 16).

14. Vorrichtung nach Anspruch 13, dadurch gekennzeichnet, dass die zylindrischen Zapfen (132 ... 137) auf dem rechteckig ausgebildeten Träger (130) in mehreren Zeilen und Spalten angeordnet sind und dass am Rande des Trägers jeweils mittig zwischen zwei einander benachbarten Zeilen oder Spalten Arretiervorrichtungen (138 ... 143) angeordnet sind (Fig. 16).

15. Vorrichtung nach einem der Ansprüche 1 bis 14, dadurch gekennzeichnet, dass für Monomode-Lichtwellenleiter für eine Lichtwellenlänge in einem Bereich von etwa 1275 nm bis etwa 1310 nm der die Krümmung bestimmende Durchmesser in einem Bereich von etwa 18 bis 23 mm liegt.

16. Vorrichtung nach einem der vorhergehenden Ansprüche, dadurch gekennzeichnet, dass der Lichtwellenleiter eine blanke oder festumspritzte Faser ist.

**Revendications**

1. Dispositif pour obtenir une atténuation optique variable, caractérisé par le fait qu'au moins une partie du guide d'ondes optiques monomode (1) peut être enroulée sur un corps de bobinage (figure 1) de manière à modifier la longueur de la partie du guide d'ondes optiques, soumise à un cintrage.

2. Dispositif suivant la revendication 1, caractérisé par le fait que le corps de bobinage possède un dispositif médian de maintien (35) servant à maintenir une boucle (10) du guide d'ondes optiques (1) et, des filetages dirigés réciproquement en des sens opposés, des deux côtés du dispositif de maintien, et servant à recevoir les extrémités du guide d'ondes optiques, qui s'étendent à partir de la boucle (figures 1, 2, 4).

3. Dispositif suivant la revendication 1 ou 2, caractérisé par le fait que le corps de bobinage est réalisé sous la forme d'un tambour cylindrique (3) (figures 1 . . . 4).

4. Dispositif suivant la revendication 3, caractérisé par le fait que les deux extrémités du guide d'ondes optiques (1) sont guidées au moyen d'un dispositif de guidage qui comporte un corps de guidage muni de filetages analogues aux filetages du corps de bobinage (figure 1).

5. Dispositif suivant la revendication 4, caractérisé par le fait que le dispositif de guidage comporte un corps de guidage (4) réalisé sous la forme d'un tambour cylindrique et un cylindre de guidage (5) (figure 1).

6. Dispositif pour obtenir une atténuation optique variable, caractérisé par le fait qu'un guide d'ondes optiques monomode est guidé par l'intermédiaire d'au moins un corps de guidage déplaçable transversalement par rapport à la direction transversale du guide d'ondes optiques et comportant au moins un segment cylindrique, sur la surface enveloppe duquel le guide d'ondes optiques s'applique au moins partiellement (figures 6 . . . 16).

7. Dispositif suivant la revendication 6, caractérisé par le fait que le guide d'ondes optiques est tendu au moyen d'un dispositif de rappel (7, 76) et est guidé au moyen d'un dispositif de guidage qui comporte, sur deux côtés réciproquement opposés du guide d'ondes optiques, des éléments de guidage en forme de peignes comportant des dents alignées et dans lequel au moins en un emplacement, un corps de guidage peut être déplacé d'une position située entre deux dents d'un peigne, dans une position située entre les deux dents, situées en vis-à-vis, de l'autre peigne, que les dents de l'un des éléments de guidage sont cintrées et que le guide d'ondes optiques est guidé respectivement entre les dents courbes et le corps de guidage déplaçable (figures 7, 10).

8. Dispositif suivant la revendication 7, caractérisé par le fait que le corps de guidage est realisé sous la forme d'un disque cylindrique (83) (figure 7).

9. Dispositif selon la revendication 8, caractérisé en ce que le disque cylindrique est maintenu de manière à pouvoir tourner à la manière d'un galet (83') (figure 10).

10. Dispositif selon l'une des revendications 7 à 8, caractérisé par le fait que l'élément de guidage (68), qui comporte les dents courbes, est réalisé d'un seul tenant et est maintenu de manière à être ajustable transversalement par rapport à la direction principale du guide d'ondes optiques (figures 6 . . . 8).

11. Dispositif suivant l'une des revendications 7 à 9, caractérisé par le fait que les dents courbes ensèrrent des galets de guidage (69) maintenus de façon à pouvoir tourner et que l'élément de guidage (6'), situé en vis-à-vis, comporte, sur sa face frontale, des dents plates et est maintenu de manière à pouvoir être réglé transversalement par rapport à la direction principale du guide d'ondes optiques (figures 9 . . . 11).

12. Dispositif suivant la revendication 6, caractérisé par le fait que le guide d'ondes optiques est tendu au moyen d'un dispositif de rappel et est guidé au moyen d'un dispositif de guidage le long d'une première droite et est guidé au-delà de la première droite au moyen de trois galets de guidage (96, 98, 99) maintenus de manière à être déplaçables, et qu'un premier des galets de guidage (96) est maintenu par son axe de manière à être déplaçable le long d'une seconde droite perpendiculaire à la première droite, et que les axes des deux autres galets de guidage (98, 99) sont maintenus de manière à pouvoir être écartés l'un par rapport à l'autre en des sens opposés le long d'une droite parallèlement à la première droite de telle sorte que le premier galet de guidage (96) est déplaçable entre les deux autres galets de guidage (98, 99) et que respectivement un point des surfaces enveloppes des autres galets de guidage (98, 99) est déplaçable au moins approximativement le long de la première droite, et que le guide d'ondes optiques est guidé par l'intermédiaire des galets de guidage de telle sorte que, lorsque le premier galet de guidage (96) est dans une position d'extrémité, le guide d'ondes optiques est dévié, à partir de la première droite, pour assumer une forme ondulée possédant un sommet déterminé par le premier galet de guidage et des creux formés par les autres galets de guidage (figures 13, 14).

13. Dispositif pour obtenir une atténuation optique variable, caractérisé par un support (130) comportant un ensemble de plusieurs corps de guidage, réalisés sous la forme d'embouts cylindriques (132 . . . 137), autour desquels il est possible d'enrouler un guide d'ondes optiques monomode selon différentes variantes, le support comportant des dispositifs d'arrêt servant à retenir le guide d'ondes optiques (figure 16).

14. Dispositif suivant la revendication 13, caractérisé par le fait que les embouts cylindriques (132 . . . 137) sont disposés sous la forme de plusieurs lignes et colonnes, sur le support (130) possédant une forme rectangulaire, et que des dispositifs d'arrêt (138 . . . 143) sont agencés sur le bord du support, respectivement dans une position médiane entredeux lignes ou colonnes réciproquement voisines (figure 16).

15. Dispositif suivant l'une des revendications 1 à 14, caractérisé par le fait que pour des guides d'ondes optiques monomode pour une longueur d'onde de la lumière se situant dans une plage comprise entre environ 275 nm et environ 1310 nm, le diamètre qui détermine la courbure se situe dans une plage comprise entre environ 18 et 23 nm.

16. Dispositif suivant l'une des revendications précédentes, caractérisé par le fait que le guide d'ondes optiques est une fibre nue ou munie d'un enrobage adhérent moulé par injection.

## Claims

1. A variable optical attenuation device, characterised in that at least a part of a monomode light-waveguide (1) is wound onto a winding body (Figure 1) to change the length of that part of the light-waveguide subjected to curvature.

2. A device as claimed in Claim 1, characterised in that the winding body comprises a central supporting device (35) which supports a loop (10) of the light-waveguide (1) and has, on both sides thereof, oppositely-directed threads which accommodate the ends of the light-waveguide which lead from the loop (Figures 1, 2, 4).

3. A device as claimed in Claim 1 or 2, characterised in that the winding body is in the form of a cylindrical drum (3) (Figures 1 ... 4).

4. A device as claimed in Claim 3, characterised in that the two ends of the light-waveguide (1) extend over a guide device which comprises a guide body provided with screws which are similar to the screws of the winding body (Figure 1).

5. A device as claimed in Claim 4, characterised in that the guide device comprises a guide body (4) in the form of a cylindrical drum and a guide roller (5) (Figure 1).

6. A variable optical attenuation device, characterised in that a monomode light-waveguide extends transversely over at least one guide body displaceable transversely to the main direction of the light-waveguide and embraces at least one cylinder segment whose outer surface is at least partially in contact with the light-waveguide (Figures 6 ... 16).

7. A device as claimed in Claim 6, characterised in that the light-waveguide is tensioned by means of a restoring device (7, 76) and is guided by means of a guide device which, on two mutually-opposite sides of the light-waveguide, comprises comb-like guide components with aligned teeth and where, at least at one point, a guide body can be displaced from a position between two teeth of the first comb into a position between the two oppositely-located teeth of the other comb, that the teeth of one of the guide components are curved, and that the respective light-waveguide extends between the curved teeth and the displaceable guide body (Figures 7, 10).

8. A device as claimed in Claim 7, characterised in that the guide body is in the form of a cylindrical disc (83) (Figure 7).

9. A device as claimed in Claim 8, characterised in that the cylindrical disc is mounted so as to be rotatable as a roller (83') (Figure 10).

10. A device as claimed in one of Claims 7 to 9, characterised in that the guide component (68) which comprises the curved teeth is of integral design and is mounted so as to be adjustable transversely to the main direction of the light-waveguide (Figures 6 ... 8.)

11. A device as claimed in one of Claims 7 to 9, characterised in that the curved teeth embrace rotatable guide rollers (69), and that the oppositely-located guide component (6') is provided at its end face with flat teeth and is mounted so as to be adjustable transversely to the main direction of the light-waveguide (Figures 9 ... 11).

12. A device as claimed in Claim 6, characterised in that the light-waveguide is tensioned by means of a restoring device and is guided by a guide device along a first straight line and is guided out of the straight line via three mobile guide rollers (96, 98, 99), and that the axle of one the guide rollers (96) is mounted so as to be displaceable along a second straight line at right angles to the first straight line, and the axles of the two other guide rollers (98, 99) are mounted so as to be deflectable in opposite directions to one another along a straight line parallel to the first straight line, in such manner that the first guide roller (96) can be moved between the two other guide rollers (98, 99) and one point of the outer surfaces of the other guide rollers (98, 99) can be moved at least approximately along the first straight line, and that the light-waveguide is conducted over the guide rollers in such manner that, in the one end position of the one guide roller (96), it is deflected out of the first straight line in the form of a wave having a wave crest governed by the first guide roller and wave troughs governed by the other guide rollers (Figures 13, 14).

13. A variable optical attenuation device, characterised by a carrier (130) comprising an arrangement of a plurality of guide bodies which consist of cylindrical pegs (132 ... 137) and around which a monomode light-waveguide can be wound in different variants, the carrier being provided with locking devices which support the light-waveguide (Figure 16).

14. A device as claimed in Claim 13, characterised in that the cylindrical pegs (132 ... 137) are arranged on the rectangular carrier (130) in a plurality of rows and columns, and that locking devices (138 ... 143) are arranged at the edge of the carrier centrally between two mutually-adjacent rows or columns (Figure 16).

15. A device as claimed in one of Claims 1 to 14, characterised in that for monomode light-waveguides for a light wavelength in a range from approximately 1275 nm to approximately 1310 nm, the diameter which governs the curvature ranges between approximately 18 and 23 mm.

16. A device as claimed in one of the preceding Claims, characterised in that the light-waveguide is a bare or extrusion-coated fibre.

1/8

FIG 1

FIG 2

FIG 3

FIG 4

FIG 5

0 141 954

FIG6

FIG7

FIG8

FIG 9

FIG 10

FIG 11

83'

83'

69

6'

FIG 12

FIG 15

FIG 13

6 / 8

**F I G 14**

**F I G 16**

**F I G 17**

FIG 18

FIG 19